Europäisches Patentamt

European Patent Office

Office européen des brevets

(19)

(11) Numéro de publication : **0 155 861**
**B1**

## (12) FASCICULE DE BREVET EUROPÉEN

(45) Date de publication du fascicule du brevet :
**17.08.88**

(21) Numéro de dépôt : **85400214.4**

(22) Date de dépôt : **08.02.85**

(51) Int. Cl.⁴ : **G 12 B 5/00**, G 02 B 7/00, G 01 B 5/00

(54) **Dispositif mécanique de réglage de position et platine optique en comportant application.**

(30) Priorité : **09.02.84 FR 8402015**

(43) Date de publication de la demande :
**25.09.85 Bulletin 85/39**

(45) Mention de la délivrance du brevet :
**17.08.88 Bulletin 88/33**

(84) Etats contractants désignés :
**BE CH DE GB IT LI NL**

(56) Documents cités :
**GB-A- 1 436 330**
**US-A- 3 596 863**
**US-A- 3 814 365**
**US-A- 4 426 055**
**REVIEW OF SCIENTIFIC INSTRUMENTS, vol. 50, no. 2, février 1979, page 258, American Institute of Physics, New York, US; J.R. PEKELSKY: "Simple, stable kinematic mirror mount"**

(73) Titulaire : **ELECTRICITE DE FRANCE Service National**
**2, rue Louis Murat**
**F-75008 Paris (FR)**

(72) Inventeur : **Pillon, Robert**
**29, rue Guillot et Dehelly**
**F-76610 Le Havre (FR)**

(74) Mandataire : **Fort, Jacques et al**
**CABINET PLASSERAUD 84, rue d'Amsterdam**
**F-75009 Paris (FR)**

## Description

L'invention concerne les dispositifs mécaniques de réglage de position suivant deux directions au moins, permettant d'assurer le positionnement fin d'un organe. Elle trouve une application particulièrement importante dans les appareils d'optique destinés à être utilisés dans l'industrie, où des raisons de complexité et de coût rendent peu souhaitable l'emploi des platines de grande précision, à réglage micrométrique, destinées à des usages très variés, que l'on trouve couramment dans les laboratoires.

On connaît déjà un dispositif du type défini au préambule de la revendication 1 (US-A-3 596 863). Le support décrit dans ce document est une pièce massive dans laquelle sont usinées des fentes laissant subsister des ponts suivant des directions perpendiculaires entre portions successives. Chaque vis est portée par une portion et prend appui sur la portion suivante. Une telle pièce est coûteuse à usiner.

L'invention vise à fournir un dispositif mécanique de réglage qui, tout à la fois, a un faible encombrement, un coût faible et une bonne stabilité en fonction de la température et autorise cependant un réglage fin.

Pour cela, l'invention propose notamment un dispositif du type ci-dessus défini, caractérisé en ce que ladite pièce support est mince et est constituée par une tôle découpée et pliée de façon à présenter a) une partie latérale formant un dièdre à 90° autour d'un pli suivant l'une des deux directions (Y) et fixée à la semelle uniquement suivant un bord rectiligne orthogonal aux deux directions (X, Y) et b) la partie plate reliée à la première par un pliage autour de la seconde direction (X), et en ce que les deux vis coopèrent chacune avec la partie du support fixée à la semelle et avec la partie plate.

Une tôle pliée est beaucoup plus économique qu'une pièce usinée. Il semblerait a priori qu'elle se prête mal à recevoir des vis de réglage. Mais cette difficulté est écartée en plaçant toutes ces vis entre la partie fixe (qui peut être munie de renforts percés de trous taraudés) et la partie plate.

Les vis coopèrent avantageusement par butée avec cette partie plate. Un ressort ou des ressorts antivibratoires peuvent être interposés entre la semelle et la partie plate pour éliminer les vibrations.

Le dispositif, tel qu'il vient d'être décrit, permet de régler la position de la partie plate suivant deux directions. Pour autoriser un réglage fin autour d'une troisième direction, perpendiculaire aux deux précédentes, il suffit de monter la semelle dans une glissière autorisant son déplacement par glissement suivant la troisième direction, sous l'action d'une vis de réglage qui peut être similaire aux deux précédentes. La glissière peut être constituée par une simple tôle pliée de façon à constituer un chemin de guidage de la semelle. Pour permettre, avant le réglage fin à l'aide de la vis, une mise en place grossière dans la direction du troisième axe, des trous ovalisés peuvent être prévus dans la glissière de façon à autoriser une première mise en place approximative sur un bâti.

Plusieurs dispositifs du genre qui vient d'être décrit peuvent être placés sur un bâti commun pour permettre d'ajuster la position relative d'organes optiques indépendants qu'il porte. Sur une même surface horizontale du bâti peuvent être placés, en plus de dispositifs du genre qui vient d'être décrit, des dispositifs supplémentaires permettant uniquement un réglage d'inclinaison autour d'un axe parallèle à la surface du bâti. Un dispositif d'inclinaison de ce genre peut comporter un support solidaire du bâti, sur lequel l'organe est monté par l'intermédiaire d'un axe de pivotement parallèle à la surface du bâti, la plaque support et l'organe présentant deux tétons en saillie parallèles à l'axe de pivotement, dont l'écartement peut être réglé à l'aide d'une vis de faible pas.

L'invention sera mieux comprise à la lecture de la description qui suit de modes particuliers d'exécution, donnés à titre d'exemples non limitatifs. La description se réfère aux dessins qui l'accompagnent, dans lesquels :

— la Figure 1 est un schéma en perspective, montrant un dispositif suivant l'invention ;

— les Figures 2 et 3 sont des vues en coupe suivant les lignes II-II et III-III de la Figure 1 ;

— la Figure 4 est une vue de dessus d'une platine optique comportant quatre dispositifs de réglage de position du genre montré en Figure 1 ;

— la Figure 5 est une vue en perspective montrant un dispositif de réglage d'inclinaison dont deux exemplaires sont également incorporés à la platine de la Figure 4.

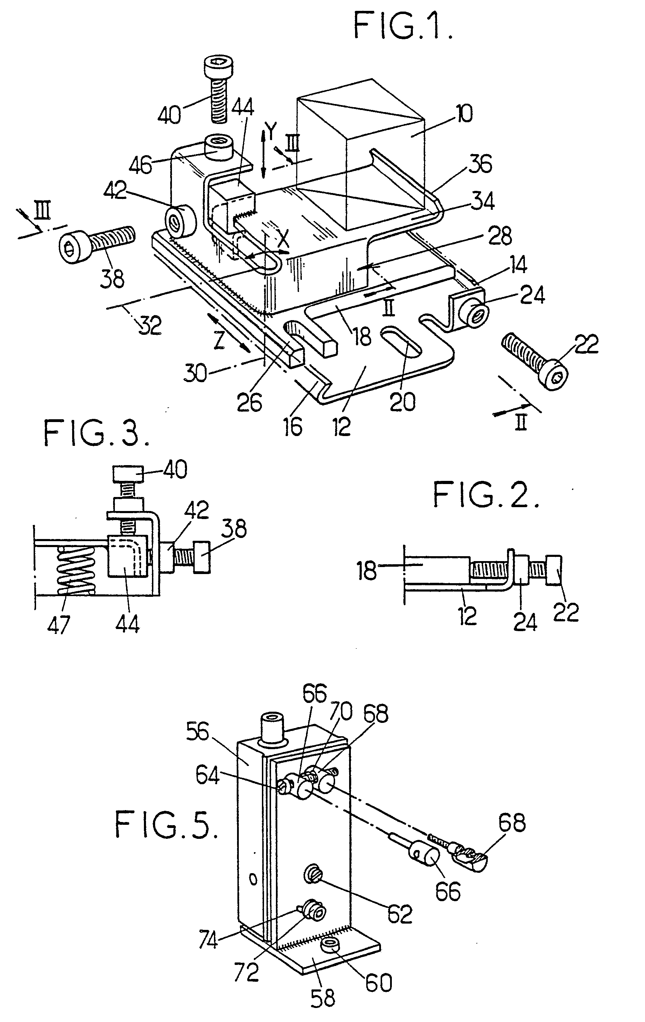

Le dispositif de réglage de position montré en Figure 1 est destiné à permettre d'ajuster la position, suivant trois directions X, Y et Z, d'un organe optique schématisé par un coin optique 10.

Le dispositif comporte une glissière 12 constituée par une tôle pliée pour former deux flancs d'appui 14 et 16 délimitant un chemin de glissement en forme de queue d'aronde, suivant la direction Z. Les flancs 14 et 16 emprisonnent, contre la face plate de la glissière 12, une semelle 18 constituant coulisseau. L'élasticité des plis de formage des flancs 14 et 16 assure le maintien de la semelle à plat sur la glissière. Dans cette dernière sont ménagés des trous 20 ovalisés dans la direction Z, permettant un positionnement grossier, de l'ordre du millimètre, de la glissière 12 sur un bâti non représenté sur la Figure 1. Le réglage fin de la semelle 18 par rapport à la glissière 12 est effectué par au moins une vis 22 prévue pour se visser plus ou moins dans un renfort 24 taraudé porté par un repli de la glissière 12. Sur la Figure 1, une seule vis 22 a été représentée. Elle prend appui contre le bord de la semelle 18 et permet de la repousser vers l'arrière. La glissière 12 peut porter, à l'opposé du renfort 24, un renfort similaire destiné également à recevoir une vis. Une fois le réglage suivant la direction Z effectué par action sur une vis, l'autre est amenée en butée, ce qui permet d'immobiliser la semelle dans la direction Z.

Lorsqu'aucun réglage suivant la direction Z n'est nécessaire, il n'est pas nécessaire de prévoir la glissière 12. La semelle 18 est alors directement fixée sur le bâti. Elle peut comporter pour cela des pattes fendues 26. La présence de ces pattes n'augmente pas pratiquement l'encombrement du dispositif, car l'une des branches qui les forme fait partie d'un patin de guidage contre les flancs 14 et 16, patin pour lequel une longueur minimale est nécessaire pour assurer la précision requise.

L'organe 10 est porté par la semelle par l'intermédiaire d'une pièce support déformable 28 mince, pouvant être constituée par découpe et pliage d'une tôle. La pièce 28 présente une paroi latérale formant un dièdre à 90° autour d'un axe de pliage 30 orienté suivant la direction Y. La tranche de cette face latérale prend appui sur la semelle 18, et elle est fixée, mais uniquement suivant la direction Z, à la semelle. Cette fixation peut être effectuée par soudure. Elle laisse la partie non soudée de la face latérale libre de glisser sur la face supérieure plate de la semelle.

Cette face latérale libre est raccordée, par un pliage autour d'un axe 32 orienté suivant la direction X, à une plate-forme 34 de réception de l'organe 10. Cette plate-forme peut présenter un rebord 36 destiné à assurer une mise en place précise de l'organe et la retenue de ce dernier.

Les moyens de réglage suivant les directions X et Y sont constitués par deux vis 38 et 40 similaires à la vis 32. Ces vis pourront par exemple avoir un pas de 50, qui permet, dans la mesure où l'on considère que l'incrément minimal de rotation appréciable est de l'ordre du centième de tour, une sensibilité de 5 $\mu$m. La vis 38 est déplaçable dans un renfort 42 percé d'un trou taraudé, renfort porté par la partie de la face la pièce 28 qui est fixée à la semelle 18. Cette vis prend un appui de butée contre un pion 44 solidarisé, par exemple par soudage, de la plate-forme 34. Une solution plus simple consiste à faire agir directement la vis sur un repli de la plate-forme 34, représenté en tirets sur les Figures 1 et 3. De façon similaire, la vis 40 est réglable dans un trou taraudé percé dans un renfort 46. On voit que les vis 38 et 40 sont respectivement déplaçables suivant les directions X et Y et permettent de déplacer la plate-forme contre les forces élastiques qui tendent à la ramener vers une position de repos. La longueur des vis 38 et 40 est évidemment prévue pour éviter qu'elle ne puisse provoquer des déformations plastiques du matériau constitutif de la pièce 28.

On voit qu'un tel dispositif présente un encombrement et un poids faibles. Il est d'un prix très bas. Il autorise un réglage fin, avec la précision requise dans le domaine optique ; enfin, l'expérience a montré qu'il a une grande stabilité en température.

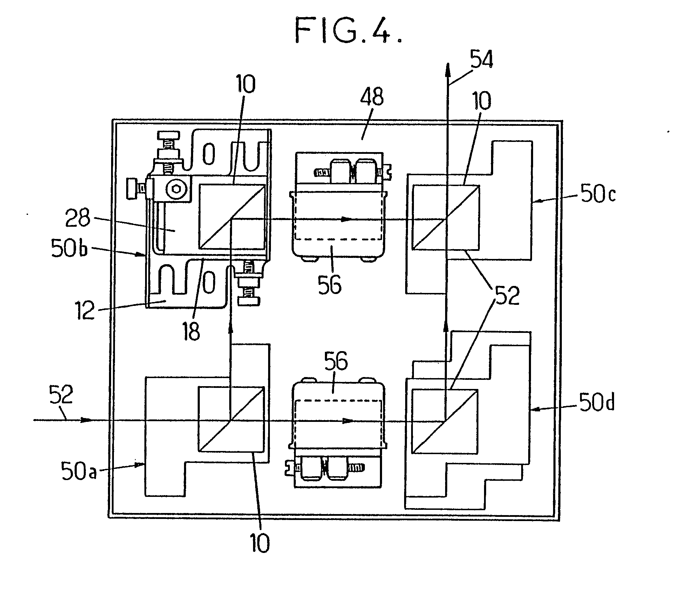

Plusieurs dispositifs du genre montré en Figures 1 à 3 peuvent être disposés sur un bâti commun pour former un appareil complexe. La Figure 4 montre, à titre d'exemple, une platine de vibromètre laser mettant en œuvre, d'une part, quatre dispositifs du genre montré en Figure 1, d'autre part, deux dispositifs de réglage d'orientation qui seront plus tard décrits en faisant référence à la Figure 5.

Les quatre dispositifs de réglage incorporés dans l'installation de la Figure 4 sont montés sur un même bâti 48. Ils sont respectivement désignés par les références 50a, 50b, 50c et 50d. Chacun porte un organe optique constitué par un élément séparateur 52 collé sur la plate-forme du dispositif. Pour plus de simplicité, seuls les éléments constitutifs du dispositif 50b ont été montrés, les autres étant représentés uniquement par leur contour et l'emplacement du composant optique 10. Les composants 50a et 50c, ou un autre couple, peuvent être démunis de glissière 18, un réglage suivant la direction Z n'étant pas nécessaire pour tous les dispositifs.

L'ensemble montré en Figure 2 permet de séparer le faisceau d'entrée reçu en 52 en deux faisceaux suivant des trajets optiques différents pour donner finalement naissance après réflexions, à un faisceau de sortie 54. Sur chacun des chemins optiques doit être inséré un modulateur. L'inclinaison de ce dernier, dans le plan de sa face perpendiculaire au bâti 48, doit être réglée avec précision, typiquement à ± 2° près autour de l'axe optique.

Dans le mode d'exécution montré en Figures 4 et 5, le réglage d'inclinaison des modulateurs 56 est également réalisé par un dispositif simple, se rapprochant dans son principe de celui des Figures 1 à 3.

Le dispositif montré en Figure 5 comprend un support 58 en T inversé, fixé de façon permanente au bâti 48, par exemple à l'aide de vis 60. La branche du T qui est perpendiculaire au bâti 48 comporte un trou de réception d'un axe 62 d'orientation du modulateur 56. La rotation du modulateur autour de cet axe est commandée par une vis 64 dont la tête prend appui sur un téton 66 fixé au support 58 et qui présente une liaison filetée avec un second téton 68 solidaire du modulateur 56, et traversant un trou oblong (non visible sur les Figures) ménagé dans le support 58. Pour plus de clarté, les tétons 66 et 68, ainsi que la vis 64, sont également représentés séparés du support 58. Un ressort 70 comprimé entre les tétons 66 et 68 maintient la tête de la vis 64 en appui. Une fois le réglage réalisé, le modulateur 56 peut être immobilisé à l'aide d'une vis de pression 72 qui traverse une boutonnière 74 de la pièce 58 et s'engage dans un trou taraudé du modulateur.

On voit que l'on réalise ainsi un ensemble simple et compact, de coût faible.

**Revendications**

1. Dispositif mécanique de réglage de position, comportant une semelle (18), une pièce support (28) fixée à la semelle et présentant une partie plate de réception de l'organe (10) dont la position est à régler ; et deux lignes de pliage orientées à 90° l'une de l'autre, et au moins deux vis de réglage (38, 40) déplaçable selon deux directions perpendiculaires et dont chacune permet d'écarter la partie plate d'une position de repos, par déformation élastique autour d'une ligne de pliage respective, caractérisé en ce que ladite pièce support est mince et est constituée par une tôle découpée et pliée de façon à présenter

a) une partie latérale formant un dièdre à 90° autour d'un pli (30) suivant l'une des deux directions (Y) et fixée à la semelle uniquement suivant un bord rectiligne orthogonal aux deux directions (X, Y) et

b) la partie plate reliée à la première par un pliage autour de la seconde direction (X), et en ce que les deux vis (38, 40) coopèrent chacune avec la partie du support fixée à la semelle et avec la partie plate.

2. Dispositif selon la revendication 1, caractérisé en ce que les vis (38, 40) sont montées dans des trous taraudés ménagés dans des renforts (42, 46) de la partie fixe de la pièce support déformable (28) et en butée contre la partie plate de la pièce support ou contre un pion (44) qui en est solidaire.

3. Dispositif selon la revendication 1 ou 2, caractérisé en ce qu'il comporte un ressort anti-vibratoire (47) comprimé entre la semelle (18) et la partie plate (34).

4. Dispositif selon la revendication 1, 2 ou 3, caractérisé en ce qu'il comporte de plus une glissière (12) munie de flancs (14, 16) de guidage de la semelle (18) suivant une direction (Z) perpendiculaire aux deux lignes de pliage et une vis de réglage fin (22) orientée suivant la direction (Z) et coopérant avec la glissière et la semelle de façon à déplacer cette dernière.

5. Dispositif selon la revendication 4, caractérisé en ce que la semelle et/ou la glissière comportent un trou allongé suivant la direction (Z) pour permettre le réglage grossier de la position de la glissière et/ou de la semelle sur un bâti (48).

6. Platine optique comportant au moins un dispositif suivant l'une quelconque des revendications précédentes de réglage de la position d'un organe optique (10) par rapport à un bâti et au moins un dispositif de réglage d'orientation d'un élément optique supplémentaire, comportant un support (56) fixé au bâti sur lequel l'organe est monté par l'intermédiaire d'une axe de pivotement parallèle à la surface du bâti, la plaque support et l'organe présentant deux tétons en saillie parallèles à l'axe de pivotement, dont l'écartement peut être réglé à l'aide d'une vis de faible pas.

**Claims**

1. Mechanical position adjustment device, comprising a base (18), a support part (28) secured to the base, having a flat portion for receiving the member (10) whose position is to be adjusted and having two folding lines whose directions are at a mutual angle of 90°, and at least two adjusment screws (38, 40) movable along two mutually orthogonal directions, each of said adjustement screws being able to force a flat portion away from a rest position by resilient flexure about a respective folding line, characterized in that said support part is thin and consists of a metal sheet cut out and folded for having

a) a lateral portion formed with a 90° angle about a fold (30) along one (Y) of the two directions and secured to the base only along a rectilinear edge which is orthogonal to the two directions (X, Y) and

b) said flat portion which is connected to the first portion along a fold about the second direction (X), and in that the two screws (38, 40) each cooperate with that portion of the support part which is secured to the base and with the flat portion.

2. Device according to claim 1, characterized in that the screws (38, 40) are located in internally threaded holes formed in reinforcements (42, 46) of the stationary portion of the deformable support part (28) and in abutting connection against the flat portion of the support part or against a boss (44) fast therewith.

3. Device according to claim 1 or 2, characterized in that it comprises a vibration dampening spring (47) compressed between the base (18) and the flat portion (34).

4. Device according to claim 1, 2 or 3, characterized in that it further comprises a slide member (12) provided with flanges (14, 16) for guiding the base (18) along a direction (Z) which is orthogonal to the two folding lines and a fine adjustement screw (22) directed along direction (Z) and cooperating with the slide member and the base for moving the latter.

5. Device according to claim 4, characterized in that the base and/or the slide member have an opening elongated along direction (Z) for coarse adjustment of the location of the slide member and/or of the base on a frame (48).

6. Optical platine comprising at least one device according to any one of the preceding claims for adjusting the position of an optical member (10) with respect to a frame and at least a device for adjustment of the angular position of a supplemental optical element, comprising a support (56) secured to the frame on which the optical member is mounted through a pivotal axis which is parallel to the surface of the frame, the support plate and the member having two projecting nips which are parallel to the pivotal axis and whose spacing may be adjusted with a screw having a small pitch.

**Patentansprüche**

1. Mechanische Vorrichtung zur Positionseinstellung mit einer Grundplatte (18), mit wenigstens einem an der Grundplatte befestigten Tragelement (28), enthaltend einen ebenen Teil zur Aufnahme des Organs (10), dessen Position eingestellt werden soll, und zwei um 90° versetzte Faltlinien, und mit wenigstens zwei in zwei zueinander senkrechten Richtungen verstellbaren Einstellschrauben (38, 40), von denen jede den ebenen Teil durch elastisches Verformen einer entsprechenden Faltlinie aus einer Ruhestellung entfernen kann, dadurch gekennzeichnet, daß das Tragelement dünn ist und aus einem ausgestanzten sowie gefalteten Blech besteht und folgendes aufweist :

a) ein Seitenteil, das ein sich um 90° um eine Faltung (30) in einer (Y) der beiden Richtungen erstreckendes Zweiflach bildet und nur längs eines zu den beiden Richtungen (X, Y) senkrechten geraden Rands an der Grundplatte befestigt ist, und

b) den ebenen Teil, der mit dem ersteren durch Umfalten um die eite Richtung (X) verbunden ist, und daß die beiden Schrauben (38, 40) jeweils mit dem an der Grundplatte befestigten Teil des Trägers und mit dem ebenen Teil zusammenarbeiten.

2. Vorrichtung nach Anspruch 1, dadurch gekennzeichnet, daß die Schrauben (38, 40) in Gewindebohrungen in Verstärkungen (42, 46) des feststehenden Teils des verformbaren Tragelements eingesetzt sind und am ebenen Teil des Tragelements oder an einem damit fest verbundenen Metallstück (44) anliegen.

3. Vorrichtung nach Anspruch 1 oder 2, gekennzeichnet durch eine zwischen der Grundplatte (18) und dem ebenen Teil (34) zusammengedrückte schwingungsverhindernde Feder (47).

4. Vorrichtung nach Anspruch 1, 2 oder 3, gekennzeichnet durch ferner eine Gleitführung (12), die versehen ist mit Flanken (14, 16) zur Führung der Grundplatte (18) in einer zu den beiden Faltlinien senkrechten Richtung und mit einer Feineinstellschraube (22), die in der Richtung (Z) ausgerichtet ist und mit der Gleitführung und der Grundplatte zusammenarbeitet zur Verschiebung der letzteren.

5. Vorrichtung nach Anspruch 4, dadurch gekennzeichnet, daß die Grundplatte und/oder die Gleitführung ein sich in der Richtung (Z) erstreckendes Langloch aufweisen zur Grobeinstellung der Position der Gleitführung und/oder der Grundplatte auf einem Untergestell (48).

6. Optische Platine mit wenigstens einer Vorrichtung nach einem der vorhergehenden Ansprüche zur Einstellung der Position eines optischen Organs (10) gegenüber einem Untergestell und mit wenigstens einer Vorrichtung zur Einstellung der Ausrichtung eines zusätzlichen optischen Organs, enthaltend einen am Untergestell befestigten Träger (56), an dem das Organ mittels einer zur Oberfläche des Untergestells parallelen Schwenkachse montiert ist, wobei die Tragplatte und das Organ zwei zur Schwenkachse parallele überstehende Ansätze aufweisen, deren Abstand durch eine Schraube mit geringer Steigung eingestellt werden kann.

FIG.1.

FIG.3.

FIG.2.

FIG.5.

# FIG.4.